# EUROPÄISCHE PATENTSCHRIFT

(11) **EP 1 165 974 B1**
(45) Veröffentlichungstag und Bekanntmachung des Hinweises auf die Patenterteilung: **21.05.2003**
(21) Anmeldenummer: 00907628.2
(22) Anmeldetag: 25.02.2000
(51) Int. Cl.: F16B 35/06

(54) **SENKKOPFSCHRAUBE**
RECESSED HEAD SCREW
VIS A TETE FRAISEE

(30) Priorität: 07.04.1999 DE 29906200 U
(43) Veröffentlichungstag der Anmeldung: 02.01.2002
(73) Patentinhaber: A-Z Ausrüstung und Zubehör GmbH & Co. KG, 45525 Hattingen (DE)
(72) Erfinder: DICKE, Robert, D-58256 Ennepetal (DE)
(74) Vertreter: Zapf, Christoph, Dipl.-Ing.
(86) Internationale Anmeldenummer: EP0001568
(87) Internationale Veröffentlichungsnummer: WO00061959

(56) Entgegenhaltungen:
- EP-A- 0 516 431
- DE-U- 8 901 963
- GB-A- 997 716
- US-A- 5 199 839

## Beschreibung

Die Erfindung betrifft eine Senkkopfschraube mit einem Kopf, mit einem Schaft und mit einem sich zumindest teilweise über den Schaft erstreckenden Gewinde, wobei der Kopf eine sich in Richtung auf den Schaft verjüngende Auflagefläche und eine Grundkontur aufweist, die in einem ersten, dem Schaft abgewandten Kopfabschnitt unter einem ersten Winkel und in einem zweiten, dem Schaft zugewandten Kopfabschnitt unter einem zweiten, kleineren Winkel konvergiert.

Derartige Senkkopfschrauben sind bekannt. Sie können beispielsweise im Kopf eine Antriebsvertiefung, wie eine Schlitzung oder Kreuzschlitzung, zum Angriff eines Schraubendrehers aufweisen. Das freie Schaftende kann als Spitze ausgebildet sein. Insbesondere kann es sich um Senkkopfschrauben handeln, die auf das Material, in das sie eingeschraubt werden, eine gewindeformende oder gewindeschneidende Wirkung ausüben. Damit für eine Antriebsvertiefung im Kopf genügend Raum zur Verfügung steht, muß dieser entsprechend voluminös ausgebildet sein. Um dies zu erreichen, sind für die konisch in Richtung auf den Schaft zulaufende Auflagefläche zwei verschiedene Kopfabschnitte vorgesehen, in denen die Anlagefläche unter unterschiedlichen Winkeln konvergiert. Der erste Winkel beträgt dabei bekanntermaßen vorzugsweise etwa 90° und der zweite Winkel etwa 40° bis 60°.

Da am Kopf kein Gewinde vorgesehen ist, kann das Problem auftreten, daß durch Schrauben mit einem voluminösen Senkkopf, nachdem sie ganz oder fast vollständig eingedreht sind, eine unerwünschte Materialzerstörung insbesondere an der Oberfläche, wie - je nach Art des Materials - ein Splittern, Reißen oder eine unerwünschte Verfomung, auftritt.

Der Erfindung liegt die Aufgabe zugrunde, eine Senkkopfschraube der eingangs beschriebenen Art derart zu verbessern, daß die vorstehend genannten negativen Erscheinungen vermieden werden können.

Die Aufgabe der Erfindung wird durch eine Senkkopfschraube der eingangs genannten Art gelöst, bei der im Bereich der Auflagefläche Reibrippen angeordnet sind, die sich über die beiden Kopfabschnitte erstrecken und mit ihren Außenkanten der konvergierenden Grundkontur des Kopfes folgen, so daß jeweils ein erster, im Bereich des ersten Kopfabschnittes liegender Kantenabschnitt und ein zweiter, im Bereich des zweiten Kopfabschnittes liegender Kantenabschnitt der Außenkanten der Reibrippen miteinander einen stumpfen Winkel einschließen, wobei die Auflagefläche gegenüber der konvergierenden Grundkontur des Kopfes radial in Richtung auf den Schaft hin zurückspringt.

Durch die erfindungsgemäße Senkkopfschraube wird insbesondere beim Eindrehen in Weichmaterial, wie Holz, eine gegenüber einer herkömmlichen Schraube verminderte Materialzerstörung, insbesondere eine geringere Spleißwirkung, erreicht. Dadurch, daß die Auflagefläche gegenüber der konvergierenden Grundkontur des Kopfes radial in Richtung auf den Schaft hin zurückspringt, erfolgt beim Eindrehen außerdem eine minimierte Materialverdrängung, da das Volumen des Kopfes geringer ist als bei der bekannten Schraube. Trotz des Vorhandenseins einer Schlitzung und der weniger voluminösen Ausbildung des Kopfes kann aber durch die stabilisierende Wirkung der Reibrippen eine ausreichend hohe Festigkeit der erfindungsgemäßen Senkkopfschraube in ihrem Kopfbereich gewährleistet werden.

Weitere vorteilhafte Ausgestaltungsmerkmale der Erfindung sind in den Unteransprüchen sowie der folgenden Beschreibung enthalten.

Anhand eines, in der Zeichnung dargestellten, bevorzugten Ausführungsbeispiels soll im folgenden die Erfindung näher erläutert werden. Dabei zeigen:
- Fig. 1: in der Vorderansicht, eine vergrößerte Darstellung einer erfindungsgemäßen Senkkopfschraube,
- Fig. 2: die erfindungsgemäße Senkkopfschraube in einer entlang der Linie II-II in Fig. 1 geschnittenen Ansicht,
- Fig. 3: einen Teilschnitt durch eine besondere Ausführungsform einer Reibrippe der erfindungsgemäßen Senkkopfschraube in einer entlang der Linie III-III in Fig. 2 geschnittenen Ansicht.

In den verschiedenen Figuren der Zeichnung sind gleiche Teile mit denselben Bezugszeichen versehen, so daß sie in der Regel auch jeweils nur einmal beschrieben werden.

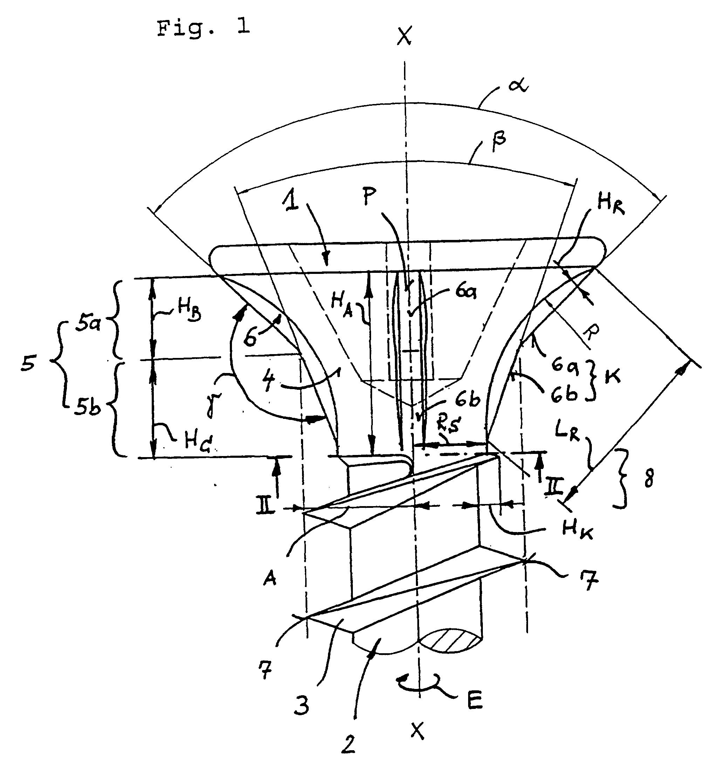

Wie die Zeichnung zeigt, weist eine erfindungsgemäße Senkkopfschraube einen Kopf 1, einen Schaft 2 und ein sich zumindest teilweise über den Schaft 2 erstreckendes Gewinde 3 auf. Der Kopf 1 wiederum weist eine sich in Richtung auf den Schaft 2 hin verjüngende Auflagefläche 4 auf. Außerdem weist der Kopf 1 eine Grundkontur 5 auf, die in einem ersten, dem Schaft 2 abgewandten Kopfabschnitt 5a unter einem ersten Winkel α und in einem zweiten, dem Schaft 2 zugewandten Kopfabschnitt 5b unter einem zweiten, kleineren Winkel β konvergiert. Der erste Winkel α kann dabei vorzugsweise etwa 90° und der zweite Winkel β vorzugsweise etwa 40° bis 60° betragen. Auf diese Weise wird erreicht, daß trotz relativ schmaler Form des Kopfes 1 im Kopf 1 genügend Raum für einen nicht näher bezeichneten, in Fig. 1 mit Strichlinien gezeichneten Kreuzschlitz zum Eingriff eines Schraubendrehers zur Verfügung steht.

Im Bereich der Auflagefläche 4 sind Reibrippen 6 angeordnet, die sich über die beiden Kopfabschnitte 5a, 5b erstrecken. Die Reibrippen 6 folgen mit ihren Außenkanten K im wesentlichen der konvergierenden Grundkontur 5 des Kopfes 1. Dadurch schließen jeweils ein erster, im Bereich des ersten Kopfabschnittes 5a liegender Kantenabschnitt 6a und ein zweiter, im Bereich des zweiten Kopfabschnittes 5b liegender Kantenabschnitt 6b der Außenkanten K der Reibrippen 6 miteinander jeweils einen stumpfen Winkel γ ein, der ein leichtes axiales Eindringen der Schraube in das material begünstigt. Die Auflagefläche 4 springt gegenüber der konvergierenden Grundkontur 5 des Kopfes 1 radial in Richtung auf den Schaft 2 hin zurück, wodurch die Materialverdrängung beim Eindrehen minimiert wird. Das Vorhandensein der Reibrippen 6 gewährleistet dabei ein hohes Flächenträgheitsmoment des Querschnittes des Kopfes 1 und damit die erforderliche Torsionsfestigkeit der Schraube.

In der dargestellten Ausführung sind vier Reibrippen 6 vorgesehen, es könnten aber auch mehr oder weniger sein, z.B. drei, sechs, acht oder mehr. Durch die Anzahl und Ausbildung der Reibrippen 6 läßt sich die erwünschte, beim Eindrehen der erfindungsgemäßen Senkkopfschraube auftretende Wirkung graduell einstellen und somit an das Material anpassen.

Der erste Kopfabschnitt 5a, in dem der erste Kantenabschnitt 6a der Reibrippen 6 angeordnet ist, sollte hinsichtlich seiner axialen Länge H_{B} nicht größer sein als etwa 60 Prozent einer axialen Länge H_{A} der Auflagefläche 4. Ebenso sollte auch der zweite Kopfabschnitt 5b, in dem der zweite Kantenabschnitt 6b der Reibrippen 6 angeordnet ist, hinsichtlich seiner axialen Länge H_{C} nicht größer sein als etwa 60 Prozent einer axialen Länge H_{A} der Auflagefläche 4. Durch eine solche Abstimmung der axialen Längen H_{B}, H_{C} der einzelnen Kantenabschnitte 6a, 6b der Auflagefläche 4 aufeinander und auf die gesamte axiale Länge H_{A} der Auflagefläche 4 läßt sich vorteilhafterweise, je nachdem, wie weit eine erfindungsgemäße Senkkopfschraube bereits eingedreht ist, ein differenziertes Eindrehverhalten einstellen.

Die Reibrippen 6 können - wie dargestellt - hinsichtlich ihrer Längserstreckung L_{R} auf Mantellinien der Auflagefläche 4 verlaufen, deren Projektion P auf einen durch den Kopf 1 verlaufenden Abschnitt der Schraubenlängsachse X-X der erfindungsgemäßen Schraube fällt. Auf diese Weise ist die Reibwirkung, die die Rippen 6 auf das Material ausüben, besonders groß.

Das Gewinde 3 weist eine Gewindekante 7 auf, die in einem Hauptbereich in Form einer Schraubenline in konstantem Abstand (Außenradius A des Gewindes 3) zu einem durch den Schaft 2 verlaufenden Abschnitt der Schraubenlängsachse X-X verläuft. Die Gewindekante 7 kann dabei in einem dem Kopf 1 zugewandten Endbereich 8 des Gewindes 3 eine abnehmende Höhe H_{K} aufweisen.

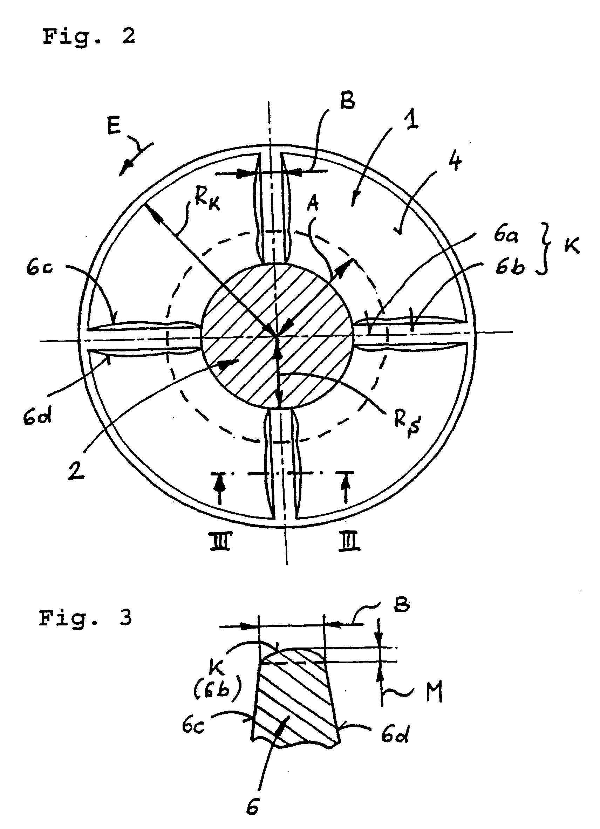

Der erste Kantenabschnitt 6a der Reibrippen 6 kann sich jeweils in einer hinsichtlich des Wirksamwerdens der Reibrippen 6 optimalen Anordnung - in der Unteransicht bzw. in der in Fig. 2 dargestellten Schnittdarstellung gesehen - in einem Ringbereich erstrecken, der außenseitig etwa durch den äußeren Radius R_{K} des Kopfes 1 und innenseitig etwa durch den Außenradius A begrenzt ist.

Der zweite Kantenabschnitt 6b der Reibrippen 6 kann sich jeweils in einer hinsichtlich des Wirksamwerdens der Reibrippen 6 optimalen Anordnung - in der Unteransicht bzw. in der in Fig. 2 dargestellten Schnittdarstellung gesehen - in einem Ringbereich erstrecken, der außenseitig etwa durch den Außenradius A des Gewindes 3 und innenseitig etwa durch den äußeren Radius R_{S} des Schaftes 2 am Übergang zum zweiten Kopfbereich 5b begrenzt ist.

Der Scheitelpunkt des stumpfen Winkels γ zwischen den beiden Kantenabschnitten 6a, 6b der Reibrippen 6 liegt dadurch etwa jeweils auf dem Außenradius A des Gewindes 3.

Dabei ist es außerdem von Vorteil, wenn die Auflagefläche 4 gegenüber der Grundkontur 5 des Kopfes 1 über der Längserstreckung L_{R} der Reibrippen 6 mit einer veränderlichen, insbesondere durch einen Kreisbogen mit dem Radius R begrenzten Höhe H_{R}, zurückspringt. Auf diese Weise steigt beispielsweise - wie dargestellt - die Höhe H_{R} der Außenkanten K der Reibrippen 6 über der Längserstreckung L_{R} der Reibrippen 6 - von einem Wert Null relativ zur Auflagefläche 4 ausgehend - zumindest bereichsweise im ersten Kopfabschnitt 5a an und fällt zumindest bereichsweise im zweiten Kopfabschnitt 5b ab, um wieder bei einem Wert Null relativ zur Auflagefläche 4 zu enden. Ein Maximalwert der Höhe H_{R} der Reibrippen 6 relativ zur Auflagefläche 4 kann dabei, insbesondere bei einem äußeren Radius R_{K} des Kopfes 1 von etwa 4 bis 5 mm, bevorzugt etwa 0,3 bis 0,7 mm betragen.

Eine optimale Formgestaltung der Reibrippen 6 liegt vor, wenn diese - wie die Zeichnung veranschaulicht - jeweils zwei, insbesondere zueinander symmetrisch ausgebildete, Seitenflächen 6c, 6d, von jeweils in jedem der Kopfabschnitte 5a, 5b konvexer Form (Fig. 2) aufweisen. Durch die symmetrische Ausbildung der Reibrippen 6 tritt dabei sowohl beim Eindrehen in Einschraubrichtung E als auch beim Herausdrehen der erfindungsgemäßen Senkkopfschraube entgegen der Einschraubrichtung E etwa die gleiche Wirkung auf.

Die festigkeitsstabilisierende Wirkung der Reibrippen 6 wird insbesondere dann positiv beeinflußt, wenn - wie ebenfalls dargestellt - die Außenkanten K der Reibrippen 6 durch Kantenflächen (Breite B) gebildet sind, an denen die Seitenflächen 6c, 6d angrenzen Die Breite B der Kantenflächen kann dabei, insbesondere bei dem schon exemplarisch genannten äußeren Radius R_{K} des Kopfes 1 von etwa 4 bis 5 mm, mit Vorteil etwa 0,3 mm bis 0,7 mm betragen.

Die Erfindung ist nicht auf das vorstehend beschriebene Ausführungsbeispiel beschränkt, sondern umfaßt auch alle im Sinne der Erfindung gleichwirkenden Ausführungen. Beispielsweise kann die Anzahl, Form und Anordnung der Reibrippen 6 von der beschriebenen Ausführung abweichen. So kann es unter Umständen angebracht sein, daß die Reibrippen 6 nicht - wie dargestellt - hinsichtlich ihrer Längserstreckung L_{R} auf Mantellinien der Auflagefläche 4 verlaufen, deren Projektion P auf einen durch den Kopf 1 verlaufenden Abschnitt der Schraubenlängsachse X-X der erfindungsgemäßen Schraube fällt, sondern (ähnlich wie das Gewinde 3) auf einer zumindest teilweise in Umfangsrichtung verlaufenden schraubenlinienförmigen Bahn liegen.

Auch kann es vorteilhaft sein, wenn - wie zusätzlich in Fig. 3 dargestellt - zumindest einige Reibrippen 6, insbesondere in ihrem ersten Kantenabschnitt 6a, gegenüber der (wie beschrieben konvergierenden) Grundkontur 5 (in Fig. 3 mit Strichlinie angedeutet) des Kopfes 1 durch ein, beispielsweise durch eine Verrundung, gebildetes Übermaß M vom Schaft 2 aus gesehen nach außen vorspringen. Dadurch tritt im letzten Einschraubbereich der erfindungsgemäßen Senkkopffschraube eine Bremswirkung auf, was vor allem bei Kurzschrauben, wie beispielsweise Beschlagschrauben, bei Verwendung maschineller Schraubendreher von Bedeutung sein kann, weil dadurch verhindert wird, daß die Schrauben, nachdem sie ganz oder fast vollständig eingedreht sind, durchdrehen, d.h. daß sie auf der Stelle drehen, ohne tiefer in das Material einzudringen, und die im Material geformten oder geschnittenen Gewindegänge zerstört werden. Das Übermaß M des Kantenabschnittes 6a kann dabei mit Vorteil nur etwa derart klein gewählt werden, daß es nach dem Einschrauben durch die Flächenpressung mit dem Material, in das die Schraube eingedreht wird, nahezu plattgedrückt ist.

Auch kann die Art, wie die Auflagefläche 4 gegenüber der Grundkontur 5 des Kopfes 1 über der Längserstreckung L_{R} der Reibrippen 6 zurückspringt, anders sein als dargestellt. An die Stelle des Kreisbogens (Fig. 1) können auch ein Ellipsenbogen, eine Parabel oder eine bikonische Kontur (ähnlich wie die der Kantenabschnitte 6a, 6b, jedoch mit entsprechend anderen Kovergenzwinkeln) treten.

Ferner ist die Erfindung nicht auf die im Anspruch 1 definierte Merkmalskombination beschränkt, sondern kann auch durch jede beliebige andere Kombination aller insgesamt offenbarten Einzelmerkmale definiert sein. Dies bedeutet, daß grundsätzlich praktisch jedes Einzelmerkmal des Anspruchs 1 weggelassen bzw. durch mindestens ein an anderer Stelle der Anmeldung offenbartes Merkmal ersetzt werden kann. Insofern ist der Anspruch 1 lediglich als ein erster Formulierungsversuch für eine Erfindung zu verstehen.

### Bezugszeichen

- 1: Kopf
- 2: Schaft
- 3: Gewinde
- 4: Auflagefläche von 1
- 5: Grundkontur von 1
- 5a: erster Kopfabschnitt 1 (Winkel α)
- 5b: zweiter Kopfabschnitt 1 (Winkel β)
- 6: Reibrippe
- 6a: erster Kantenabschnitt von K
- 6b: zweiter Kantenabschnitt von K
- 6c, 6d: Seitenflächen von 6
- 7: Gewindekante von 3
- 8: Endbereich von 3

- A: Außenradius von 3 (Abstand von 7 zu X-X)
- B: Breite von K
- E: Eindrehrichtung
- H_{A}: axiale Länge von 4
- H_{B}: axiale Länge von 5a
- H_{C}: axiale Länge von 5b
- H_{K}: Höhe von 7
- H_{R}: Höhe von 6
- K: Außenkante von 6
- L_{R}: Längserstreckung von 6
- M: Übermaß von 6a
- P: Projektion von 6
- R: Radius
- R_{K}: äußerer Radius von 1
- R_{S}: Radius von 2 an 5b
- X-X: Schraubenlängsachse (durch 1 und 2)

- α: Konvergenzwinkel von 5a
- β: Konvergenzwinkel von 5b
- γ: Winkel zwischen 6a und 6b

## Patentansprüche

1. Senkkopfschraube mit einem Kopf (1), mit einem Schaft (2) und mit einem sich zumindest teilweise über den Schaft (2) erstreckenden Gewinde (3), wobei der Kopf (1) eine sich in Richtung auf den Schaft (2) verjüngende Auflagefläche (4) und eine Grundkontur (5) aufweist, die in einem ersten, dem Schaft (2) abgewandten Kopfabschnitt (5a) unter einem ersten Winkel (α) und in einem zweiten, dem Schaft (2) zugewandten Kopfabschnitt (5b) unter einem zweiten, kleineren Winkel (β) konvergiert,
**dadurch gekennzeichnet, daß** im Bereich der Auflagefläche (4) Reibrippen (6) angeordnet sind, die sich über die beiden Kopfabschnitte (5a, 5b) erstrecken und mit ihren Außenkanten (K) der konvergierenden Grundkontur (5) des Kopfes (1) folgen, so daß jeweils ein erster, im Bereich des ersten Kopfabschnittes (5a) liegender Kantenabschnitt (6a) und ein zweiter, im Bereich des zweiten Kopfabschnittes (5b) liegender Kantenabschnitt (6b) der Außenkanten (K) der Reibrippen (6) miteinander einen stumpfen Winkel (γ) einschließen, wobei die Auflagefläche (4) gegenüber der konvergierenden Grundkontur (5) des Kopfes (1) radial in Richtung auf den Schaft (2) hin zurückspringt.

2. Senkkopfschraube nach Anspruch 1,
**dadurch gekennzeichnet, daß** der erste Winkel (α) etwa 90° und der zweiten Winkel (β) etwa 40° bis 60° beträgt.

3. Senkkopfschraube nach Anspruch 1 oder 2,
**dadurch gekennzeichnet, daß** der erste Kopfabschnitt (5a), in dem der erste Kantenabschnitt (6a) der Reibrippen (6) angeordnet sind, hinsichtlich seiner axialen Länge (H_{B}) nicht größer ist als etwa 60 Prozent einer axialen Länge (H_{A}) der Auflagefläche (4).

4. Senkkopfschraube nach einem der Ansprüche 1 bis 3,
**dadurch gekennzeichnet, daß** der zweite Kopfabschnitt (5b), in dem der zweite Kantenabschnitt (6b) der Reibrippen (6) angeordnet ist, hinsichtlich seiner axialen Länge (H_{C}) nicht größer ist als etwa 60 Prozent einer axialen Länge (H_{A}) der Auflagefläche (4).

5. Senkkopfschraube nach einem der Ansprüche 1 bis 4,
**dadurch gekennzeichnet, daß** die Reibrippen (6) hinsichtlich ihrer Längserstreckung (L_{R}) auf Mantellinien der Auflagefläche (4) verlaufen, deren Projektion (P) auf einen durch den Kopf (1) verlaufenden Abschnitt der Schraubenlängsachse (X-X) fällt.

6. Senkkopfschraube nach einem der Ansprüche 1 bis 5,
**dadurch gekennzeichnet, daß** das Gewinde (3) eine Gewindekante (7) aufweist, die über den Schaft (2), zumindest abschnittsweise, mit konstantem Außenradius (A) verläuft, wobei der erste Kantenabschnitt (6a) der Reibrippen (6) in einem Ringbereich angeordnet ist, der - in der Unteransicht gesehen - außenseitig etwa durch einen äußeren Radius (R_{K}) des Kopfes (1) und innenseitig etwa durch den Außenradius (A) begrenzt ist.

7. Senkkopfschraube nach einem der Ansprüche 1 bis 6,
**dadurch gekennzeichnet, daß** das Gewinde (3) eine Gewindekante (7) aufweist, die über den Schaft (2), zumindest abschnittsweise, mit konstantem Außenradius (A) verläuft, wobei der zweite Kantenabschnitt (6b) der Reibrippen (6) in einem Ringbereich angeordnet ist, der - in der Unteransicht gesehen - außenseitig etwa durch den Außenradius (A) des Gewindes (3) und innenseitig etwa durch einen äußeren Radius (Rₛ) des Schaftes (2) begrenzt ist.

8. Senkkopfschraube nach einem der Ansprüche 1 bis 7,
**dadurch gekennzeichnet, daß** die Reibrippen (6) jeweils zwei, insbesondere zueinander symmetrisch ausgebildete, Seitenflächen (6c, 6d), von jeweils in jedem der Kopfabschnitte (5a, 5b) konvexer Form aufweisen.

9. Senkkopfschraube nach einem der Ansprüche 1 bis 8,
**dadurch gekennzeichnet, daß** die Außenkanten (K) der Reibrippen (6) durch Kantenflächen (Breite B) gebildet sind, an denen die Seitenflächen (6c, 6d) angrenzen.

10. Senkkopfschraube nach Anspruch 9,
**dadurch gekennzeichnet, daß** die Breite (B) der Kantenflächen (Breite B) etwa 0,3 mm bis 0,7 mm beträgt.

11. Senkkopfschraube nach einem der Ansprüche 1 bis 10,
**dadurch gekennzeichnet, daß** die Auflagefläche (4) gegenüber der Grundkontur (5) des Kopfes (1) über der Längserstreckung (L_{R}) der Reibrippen (6) mit einer veränderlichen, insbesondere durch einen Kreisbogen (Radius R) begrenzten Höhe (H_{R}), zurückspringt.

12. Senkkopfschraube nach einem der Ansprüche 1 bis 11,
**dadurch gekennzeichnet, daß** eine Höhe (H_{R}) der Außenkanten (K) der Reibrippen (6) über der Längserstreckung (L_{R}) der Reibrippen (6) von einem Wert Null relativ zur Auflagefläche (4) ausgehend zumindest bereichsweise im ersten Kopfabschnitt (5a) ansteigt und zumindest bereichsweise im zweiten Kopfabschnitt (5b) abfällt und bei einem Wert Null relativ zur Auflagefläche (4) endet.

13. Senkkopfschraube nach einem der Ansprüche 1 bis 12,
**dadurch gekennzeichnet, daß** ein Maximalwert einer/der Höhe (H_{R}) der Reibrippen (6) relativ zur Auflagefläche (4), insbesondere bei einem äußeren Radius (R_{K}) des Kopfes (1) von etwa 4 bis 5 mm, etwa 0,3 bis 0,7 mm beträgt.

14. Senkkopfschraube nach einem der Ansprüche 1 bis 13,
**gekennzeichnet durch** zwei bis acht, insbesondere vier, Reibrippen (6).

15. Senkkopfschraube nach einem der Ansprüche 1 bis 14,
**dadurch gekennzeichnet, daß** zumindest einige Reibrippen (6) in ihrem ersten Kantenabschnitt (6a) gegenüber der Grundkontur (5) des Kopfes (1) durch ein Übermaß (M) - vom Schaft (2) aus gesehen - nach außen vorspringen.

## Claims

1. Countersunk head screw having a head (1), a shank (2) and a thread (3) extending at least partly over the shank (2), the head (1) having a bearing surface (4), narrowing in the direction of the shank (2), and a basic contour (5) which converges at a first angle (α) in a first head section (5a) remote from the shank (2) and at a second, smaller angle (β) in a second head section (5b) facing the shank (2), **characterized in that** friction ribs (6) are arranged in the region of the bearing surface (4), and these friction ribs (6) extend over the two head sections (5a, 5b) and, with their outer edges (K), follow the converging basic contour (5) of the head (1), so that in each case a first edge section (6a), lying in the region of the first head section (5a), and a second edge section (6b), lying in the region of the second head section (5b), of the outer edges (K) of the friction ribs (6) enclose an obtuse angle (γ) with one another, the bearing surface (4) being set back radially in the direction of the shank (2) relative to the converging basic contour (5) of the head (1).

2. Countersunk head screw according to Claim 1, **characterized in that** the first angle (α) is about 90° and the second angle (β) is about 40° to 60°.

3. Countersunk head screw according to Claim 1 or 2, **characterized in that**, with regard to its axial length (H_{B}), the first head section (5a), in which the first edge section (6a) of the friction ribs (6) is arranged, is not greater than about 60 per cent of an axial length (H_{A}) of the bearing surface (4).

4. Countersunk head screw according to one of Claims 1 to 3, **characterized in that**, with regard to its axial length (H_{C}), the second head section (5b), in which the second edge section (6b) of the friction ribs (6) is arranged, is not greater than about 60 per cent of an axial length (H_{A}) of the bearing surface (4).

5. Countersunk head screw according to one of Claims 1 to 4, **characterized in that**, with regard to their longitudinal extent (L_{R}), the friction ribs (6) run on generating lines of the bearing surface (4), the projection (P) of which falls onto a section, running through the head (1), of the screw longitudinal axis (X-X).

6. Countersunk head screw according to one of Claims 1 to 5, **characterized in that** the thread (3) has a thread edge (7) which runs with a constant outer radius (A), at least in sections, over the shank (2), the first edge section (6a) of the friction ribs (6) being arranged in an annular region which, as seen in bottom view, is defined on the outside approximately by an outer radius (R_{K}) of the head (1) and on the inside approximately by the outer radius (A).

7. Countersunk head screw according to one of Claims 1 to 6, **characterized in that** the thread (3) has a thread edge (7) which runs with a constant outer radius (A), at least in sections, over the shank (2), the second edge section (6b) of the friction ribs (6) being arranged in an annular region which, as seen in bottom view, is defined on the outside approximately by the outer radius (A) of the thread (3) and on the inside approximately by an outer radius (R_{S}) of the shank (2).

8. Countersunk head screw according to one of Claims 1 to 7, **characterized in that** the friction ribs (6) each have two side faces (6c, 6d) which are designed in particular to be symmetrical to one another and are each of convex shape in each of the head sections (5a, 5b).

9. Countersunk head screw according to one of Claims 1 to 8, **characterized in that** the outer edges (K) of the friction ribs (6) are formed by edge surfaces (width B), to which the side faces are adjacent (6c, 6d).

10. Countersunk head screw according to Claim 9, **characterized in that** the width (B) of the edge surfaces (width B) is about 0.3 mm to 0.7 mm.

11. Countersunk head screw according to one of Claims 1 to 10, **characterized in that** the bearing surface (4) is set back relative to the basic contour (5) of the head (1) over the longitudinal extent (L_{R}) of the friction ribs (6) by a variable height (H_{R}) defined in particular by an arc of a circle (radius R).

12. Countersunk head screw according to one of Claims 1 to 11, **characterized in that** a height (H_{R}) of the outer edges (K) of the friction ribs (6) over the longitudinal extent (L_{R}) of the friction ribs (6) increases from a value of zero relative to the bearing surface (4) at least in regions of the first head section (5a) and decreases at least in regions of the second head section (5b) and ends at a value of zero relative to the bearing surface (4).

13. Countersunk head screw according to one of Claims 1 to 12, **characterized in that** a maximum value of a/the height (H_{R}) of the friction ribs (6) relative to the bearing surface (4), in particular at an outer radius (R_{K}) of the head (1) of about 4 to 5 mm, is about 0.3 to 0.7 mm.

14. Countersunk head screw according to one of Claims 1 to 13, **characterized by** two to eight, in particular four, friction ribs (6).

15. Countersunk head screw according to one of Claims 1 to 14, **characterized in that** at least some friction ribs (6) project outwards in their first edge section (6a) relative to the basic contour (5) of the head (1) by an oversize M - as viewed from the shank (2).

## Revendications

1. Vis à tête fraisée avec une tête (1), avec une tige (2) et avec un filetage (3) s'étendant au moins en partie sur la tige (2), la tête (1) présentant une surface d'appui (4) se rétrécissant en direction de la tige (2) et un contour de base (5) qui converge en formant un premier angle (α) dans un premier tronçon de tête (5a) opposé à la tige et en formant un deuxième angle (β) plus petit dans un deuxième tronçon de tête (5b) tourné vers la tige, **caractérisée en ce que** des nervures de frottement (6) sont disposées dans la zone de la surface d'appui (4), qui s'étendent sur les deux tronçons de tête (5a, 5b) et suivent avec leurs arêtes extérieures (K) le contour de base convergent (5) de la tête (1), de telle façon qu'un premier segment d'arête (6a), situé dans la zone du premier tronçon de tête (5a), et un deuxième segment d'arête (6b), situé dans la zone du deuxième tronçon de tête (5b), des arêtes extérieures (K) des nervures de frottement (6) forment ensemble un angle obtus (γ), la surface d'appui (4) formant un retrait dans le sens radial dans la direction de la tige (2) par rapport au contour de base (5) convergent de la tête (1).

2. Vis à tête fraisée selon la revendication 1,
**caractérisée en ce que** le premier angle (α) est d'environ 90° et le deuxième angle (β) d'environ 40° à 60°.

3. Vis à tête fraisée selon la revendication 1 ou 2,
**caractérisée en ce que** le premier tronçon de tête (5a), dans lequel est disposé le premier segment d'arête (6a) des nervures de frottement (6), n'est pas supérieur, en ce qui concerne sa longueur axiale (H_{B}), à environ 60% d'une longueur axiale (H_{A}) de la surface d'appui (4).

4. Vis à tête fraisée selon l'une des revendications 1 à 3,
**caractérisée en ce que** le deuxième tronçon de tête (5b), dans lequel est disposé le deuxième segment d'arête (6b) des nervures de frottement (6) n'est pas supérieur, en ce qui concerne sa longueur axiale (H_{C}) à environ 60% d'une longueur axiale (H_{A}) de la surface d'appui (4).

5. Vis à tête fraisée selon l'une des revendications 1 à 4,
**caractérisée en ce que** les nervures de frottement (6) s'étendent, en ce qui concerne leur étendue longitudinale (L_{R}), sur des génératrices de la surface d'appui (4), dont la projection (P) tombe sur un segment de l'axe longitudinal de la vis (X-X) passant par la tête (1).

6. Vis à tête fraisée selon l'une des revendications 1 à 5,
**caractérisée en ce que** le filetage (3) présente une arête de filet (7) qui s'étend sur la tige (2) au moins par segments, avec un rayon extérieur constant (A), le premier segment d'arête (6a) des nervures de frottement (6) étant disposé dans une zone annulaire qui, quand on regarde du dessous, est limité du côté extérieur à peu près par un rayon extérieur (R_{K}) de la tête (1) et du côté intérieur à peu près par le rayon extérieur (A).

7. Vis à tête fraisée selon l'une des revendications 1 à 6,
**caractérisée en ce que** le filetage (3) présente une arête de filet (7) qui s'étend sur la tige (2), au moins par segments, avec un rayon extérieur constant (A), le deuxième segment d'arête (6b) des nervures de frottement (6) étant disposé dans une zone annulaire qui, quand on regarde du dessous, est limité du côté extérieur à peu près par le rayon extérieur (A) du filetage (3) et du côté intérieur à peu près par un rayon extérieur (R_{S}) de la tige (2).

8. Vis à tête fraisée selon l'une des revendications 1 à 7,
**caractérisée en ce que** les nervures de frottement (6) présentent deux faces latérales (6c, 6d), en particulier formées symétriquement l'une de l'autre, de forme convexe dans chacun des tronçons de tête (5a, 5b).

9. Vis à tête fraisée selon l'une des revendications 1 à 8,
**caractérisée en ce que** les arêtes extérieures (K) des nervures de frottement (6) sont formées par des faces d'arête (largeur B) auxquelles les faces latérales (6c, 6d) sont adjacentes.

10. Vis à tête fraisée selon la revendication 9,
**caractérisée en ce que** la largeur (B) des faces d'arête (largeur B) est de 0,3 mm à 0,7 mm environ.

11. Vis à tête fraisée selon l'une des revendications 1 à 10,
**caractérisée en ce que** la surface d'appui (4) forme un retrait par rapport au contour de base (5) de la tête (1) sur l'étendue longitudinale (L_{R}) des nervures de frottement (6) avec une hauteur (H_{R}) variable, en particulier limitée par un arc de cercle (rayon R).

12. Vis à tête fraisée selon l'une des revendications 1 à 11,
**caractérisée en ce qu'**une hauteur (H_{R}) des arêtes extérieures (K) des nervures de frottement (6) augmente au moins par endroits dans le premier tronçon de tête (5a) sur l'étendue longitudinale (L_{R}) des nervures de frottement (6) à partir d'une valeur zéro relativement à la surface d'appui (4) et diminue dans le deuxième tronçon de tête (5b) au moins par endroits et se termine à une valeur zéro relativement à la surface d'appui (4).

13. Vis à tête fraisée selon l'une des revendications 1 à 12,
**caractérisée en ce qu'**une valeur maximale d'une/de la hauteur (H_{R}) des nervures de frottement (6) relativement à la surface d'appui (4) est de 0,3 à 0,7 mm, en particulier pour un rayon extérieur (R_{K}) de la tête (1) d'environ 4 à 5 mm.

14. Vis à tête fraisée selon l'une des revendications 1 à 13,
**caractérisée par** deux à huit, en particulier quatre nervures de frottement (6).

15. Vis à tête fraisée selon l'une des revendications 1 à 14,
**caractérisée en ce qu'**au moins quelques nervures de frottement (6) dans leur premier segment d'arête (6a) font saillie vers l'extérieur par rapport au contour de base (5) de la tête (1) par un dépassement (M) de la tige (2), quand on regarde à partir de la tige (2).
